# EUROPEAN PATENT SPECIFICATION

(11) **EP 0 450 546 B1**
(45) Date of publication and mention of the grant of the patent: **12.07.1995**
(21) Application number: 91105147.2
(22) Date of filing: 02.04.1991
(51) Int. Cl.: F02B 27/00, F02B 27/02

(54) **Intake system for a combustion engine**
Einlassanordnung für Brennkraftmaschine
Système d'admission pour moteur à combustion

(30) Priority: 31.03.1990 JP 85808/90
(43) Date of publication of application: 09.10.1991
(73) Proprietor: Mazda Motor Corporation, Aki-gun Hiroshima-ken (JP)
(72) Inventor: Aoki, Motoi, Fuchu-cho, Aki-gun, Hiroshima-ken, (JP); Kurokawa, Toshikazu, Fuchu-cho, Aki-gun, Hiroshima-ken (JP); Tanaka, Fusatosi, Fuchu-cho, Aki-gun, Hiroshima-ken, (JP); Matsuura, Kouji, Fuchu-cho, Aki-gun, Hiroshima-ken (JP)
(74) Representative: Melzer, Wolfgang, Dipl.-Ing.

(56) References cited:
- EP-A- 0 182 223
- EP-A- 0 402 091
- US-A- 4 763 612
- PATENT ABSTRACTS OF JAPAN vol. 12, no. 222 (M-712)(3069) 24 June 1988, & JP-A-63 18130
- PATENT ABSTRACTS OF JAPAN vol. 14, no. 323 (M-997)(4266) 11 July 1990, & JP-A-2 108818

## Description

### BACKGROUND OF THE INVENTION

### 1. Field of the Invention

The present invention relates to an intake system of a combustion engine according to the preamble of claim 1.

### 2. Description of Related Art

US Patent Nr. 4 763 612 discloses such an intake system, which takes advantage of dynamic effects of the intake air by supplying same to each of the merging sections, which are each composed of a surge tank, and from there to the corresponding cylinders via a group of long individual intake passages in case of low speed running and via a group of short individual intake passages in case of high speed running of the engine. Both groups of individual intake passages are formed separately from each other.

### SUMMARY OF THE INVENTION

The object of the present invention is to provide an intake system of a combustion engine so adapted as to provide at low cost an efficient supercharging throughout the whole operating range of the combustion engine.

This object is achieved by the features of claim 1.

The arrangement of the present invention enables intake air to be supplied from the connecting tank to each of the cylinders by using a short-length connecting passage bypassing the long-length upstream intake manifold passages, the merging sections and part of the individual intake passages, when the number of engine revolutions is high and inertia supercharging is to take place. Hence, the length of the passage for supplying intake air is made extremely short as well as output and response is improved to a great extent.

Further, the connecting passage communicates the connecting tank with the upstream portions of the upstream intake manifold passages, thus preventing adverse effects on the resonant supercharging in case of supplying the intake air through the long-length upstream intake manifold passages, the merging sections and the total length of the individual intake passages at low speed running, thereby implementing the resonant supercharging in such a state as close to an ideal state.

Other objects, features and advantages of the present invention will become apparent in the course of the description of the preferred embodiments, which follows, with reference to the accompanying drawings.

Fig. 1 is a top plan view of a combustion engine according to the present invention for use in an automotive vehicle.

Fig. 2 is a front elevational view, with a portion cut away, of the combustion engine of Fig. 1.

### DESCRIPTION OF THE PREFERRED EMBODIMENTS

In describing a preferred embodiment of the present invention, reference will be made to a 12-cylinder automobile internal combustion engine of a type comprising a cylinder block having two cylinder banks in a V-shaped configuration with six in-line cylinders in each bank.

The engine cylinder block is shown to have a first or left-hand a second or right-hand cylinder bank 1L and 1R, respectively, extending parallel to each other on both sides of a longitudinal center line of the cylinder block. Each of those cylinder banks has six in-line combustion chambers defined therein and having respective intake ports. The intake ports of the combustion chambers in the left-hand cylinder bank 1L are identified by 2a, 2b, 2c, 2d, 2e and 2f, respectively, while the intake ports of the combustion chambers in the right-hand cylinder bank 1R are identified by 2g, 2h, 2i, 2j, 2k and 2l, respectively.

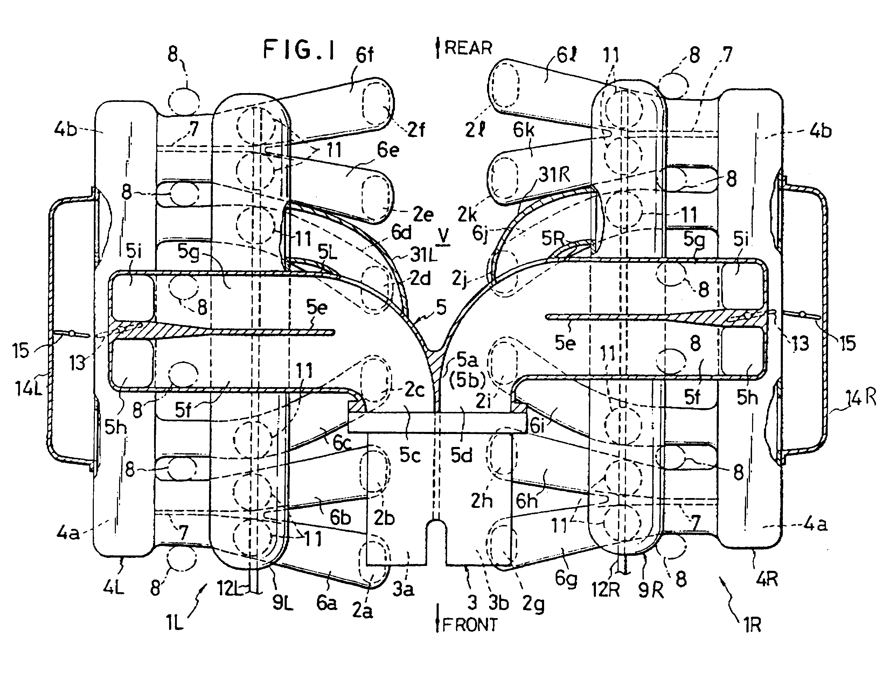

The cylinder block has a throttle casing 3 mounted thereon and positioned between the cylinder banks 1L and 1R adjacent a front end of the engine cylinder block with respect to the direction of forward run of the automotive vehicle (or a lower portion of the drawing of Fig. 1). The interior of the throttle casing 3 is divided by a partition wall so as to define a left-hand and a right-hand throttle passage 3a and 3b, which are associated with the left-hand and right-hand cylinder banks 1L and 1R, respectively, and include throttle valves.

Positioned above the cylinder banks 1L and 1R and on both sides of a generally V-shaped longitudinal center space V delimited between the cylinder banks 1L and 1R are arranged a left-hand and a right-hand surge tank 4L and 4R, respectively, each of which being generally elongated and extending in a direction generally parallel to a crank axis of a crankshaft of the engine, or to the longitudinal direction of the cylinder block. The surge tanks 4L and 4R communicate with the throttle passages 3a and 3b in the throttle casing 3 through an upstream intake manifold 5 as will be described subsequently in detail.

The upstream intake manifold 5 comprises a merging region 5a extending a small distance from a rear end of the throttle casing 3 in a direction parallel to the crank axis referred to above, and a pair of intake manifold branch ducts 5L and 5R is branched off from the merging region 5a so as to extend towards the left-hand and the right-hand surge tank 4L and 4R, respectively. The merging region 5a is of a design progressively increasing in elevation so as to incline upwards in a direction close to the rear of an automobile body structure at an angle of inclination generally conforming to the angle of inclination of a hingedly supported bonnet or hood adapted to selectively close and open an access opening leading to an engine room in the automobile body structure. An open end of the left-hand branch duct 5L remote from the throttle casing 3 is fluid-connected with that portion of an upper wall of the left-hand surge tank 4L which is located generally intermediate of the length of same surge tank 4L, whereas an open end of the right-hand branch duct 5R remote from the throttle casing 3 is fluid-connected with that portion of an upper wall of the right-hand surge tank 4R which is located generally intermediate of the length of same surge tank 4R. Respective connections between the branch ducts 5L and 5R and those intermediate portions of the upper walls of the surge tanks 4L and 4R are generally identified by 5h and 5i in Fig. 1.

The merging region 5a of the upstream intake manifold 5 has a partition wall 5b dividing its interior into a left-hand and a right-hand passage 5c and 5d, which are in communication with the left-hand and right-hand throttle passages 3a and 3b, respectively, defined within the throttle casing 3. Similarly, the interior of each of the branch ducts 5L and 5R is divided into a first and a second intake manifold passages 5f and 5g, respectively, by means of a partition wall 5e extending from the end of the respective branch duct 5L and 5R adjacent the associated surge tank 4L and 4R and terminating adjacent the merging region 5a.

The left-hand surge tank 4L communicates with the intake ports 2a, 2b, 2c, 2d, 2e and 2f in the left-hand cylinder bank 1L through individual intake passages 6a, 6b, 6c, 6d, 6e and 6f which extend from the respective intake ports 2a to 2f to a side wall of the left-hand surge tank 4L facing the longitudinal center space V and which pass underneath the upstream intake manifold 5, specifically the left-hand branch duct 5L. Similarly, the right-hand surge tank 4R communicates with the intake ports 2g to 2l in the right-hand cylinder bank 1R through individual intake passages 6g, 6h, 6i, 6j, 6k and 6l which extend from the respective intake ports 2g to 2l to a side wall of the right-hand surge tank 4R facing the longitudinal center space V and which pass underneath the upstream intake manifold 5, specifically the right-hand branch duct 5R.

The intake passages 6a and 6b are in practice defined in a generally Y-shaped piping which comprises a common piping portion adjacent the surge tank 4L and divided by a partition wall 7 into two passage portions which form respective parts of the intake passages 6a and 6b. Similarly, the intake passage 6e and 6f are in practice defined in a generally Y-shaped piping which comprises a common piping portion adjacent the surge tank 4L and divided by a partition wall 7 into two passage portions which form respective parts of the intake passages 6e and 6f. The intake passages 6g and 6h are in practice defined in a generally Y-shaped piping which comprises a common piping portion adjacent the surge tank 4R and divided by a partition wall 7 into two passage portions which form respective parts of the intake passages 6g and 6h. Finally, the intake passages 6k and 6l are in practice defined in a generally Y-shaped piping which comprises a common piping portion adjacent the surge tank 4R and divided by a partition wall 7 into two passage portions which form respective parts of the intake passages 6k and 6l. The remaining intake passages 6c and 6d as well as 6i and 6j are each formed as a single suction pipe.

By the employment of this design, an access to ignition plugs 8 associated with the left-hand and right-hand cylinder banks 1L and 1R, as shown by the phantom lines in Fig. 1, is possible without being interfered by the presence of the individual intake passages 6a to 6l.

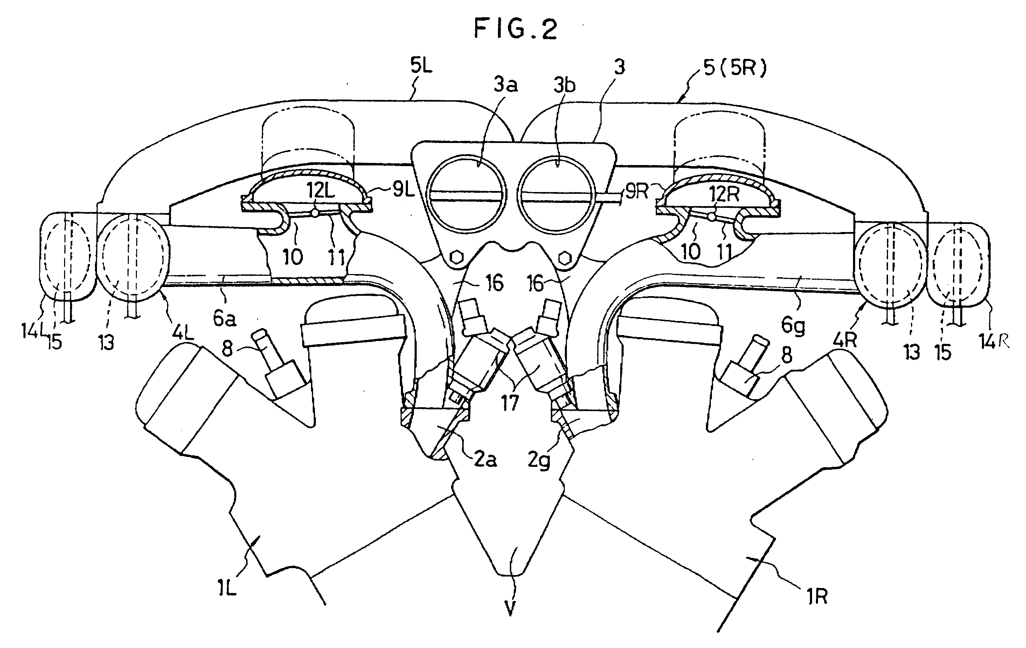

A generally elongated connecting tank 9L is mounted above the left-hand cylinder bank 1L so as to extend generally parallel to the adjacent surge tank 4L in a space delimited between the branch duct 5L and the group of the left-hand intake passages 6a to 6f. As best shown in Fig. 2, this connecting tank 9L communicates with the left-hand group of intake passages 6a to 6f through respective short passages 10, each having a respective shutter valve 11 pivotally supported therein by means of a common pivot shaft 12L that extends generally over the length of the connecting tank 9L. Similarly, a generally elongatad connecting tank 9R is mounted above the right-hand cylinder bank 1R so as to extend generally parallel to the adjacent surge tank 4R in a space delimited between the branch duct 5R and the group of the right-hand intake passages 6g to 6l, and communicates with this group of intake passages 6g to 6l through respective short passages 10, each having a respective shutter valve 11 pivotally supported by means of a common pivot shaft 12R, which extends generally over the length of the connecting tank 9R. As will be discussed later, those shutter valves 11 serve to adjust or change the inertia supercharging characteristics so as to be in synchronism with the number of engine revolutions.

Each of the connecting tanks 9L and 9R is of a design wherein, in order to secure as large a volume as possible without adversely affecting the positioning of the associated branch duct 5L or 5R, a generally intermediate portion of the respective connecting tank 9L or 9R immediately beneath the associated branch duct 5L or 5R is substantially flattened as best shown by the solid line in Fig. 2, while portions thereof on respective sides of the associated branch duct 5L or 5R are generally radially outwardly enlarged so as to assume maximum sectional areas as shown by double-dotted chain lines in Fig. 2. However, front and rear end portions of the respective connecting tank 9L or 9R are again flattened progressively as the distance from the associated branch duct 5L or 5R increases.

Each of the surge tanks 4L and 4R has a choke valve 13 disposed therein at a location substantially intermediate of the length thereof for pivotal movement between an opened and a closed position with respect to the direction of the crank axis or the longitudinal direction of the cylinder block. Each choke valve 13 is operable to adjust or change the resonant supercharging characteristics so as to be in synchronization with the number of engine revolutions and, when held in the closed position, divides the interior of the associated surge tank 4L or 4R into two chambers 4a and 4b. In other words, as long as the respective choke valve 13 is in the opened position, only one chamber is defined Within the associated surge tank 4L or 4R.

More specifically, referring to the left-hand surge tank 4L for the purpose of clarity, the intake passages 6a to 6f communicate with each other through the single chamber in the surge tank 4L, when and as long as the choke valve 13 is in the opened position; but when the choke valve 13 is pivoted to the closed position, the interior of the surge tank 4L is divided into the two chambers 4a and 4b, the first chamber 4a communicating with the intake passages 6a to 6c, while the second chamber 4b communicates with the intake passages 6d to 6f. On the other hand, the two passages 5g and 5f of the left-hand branch duct 5L open into the interior of the associated surge tank 4L at locations on both sides of the choke valve 13 and, therefore, when the choke valve 13 is in the closed position dividing the interior of the surge tank 4L into the chambers 4a and 4b, air to be mixed with fuel and flowing through the passages 5g and 5f of the branch duct 5L is supplied into the chambers 4a and 4b.

The above description of the left-hand surge tank 4L equally applies to the right-hand surge tank 4R. Briefly speaking, when and as long as the choke valve 13 in the right-hand surge tank 4R is in the closed position, air to be mixed with fuel and flowing through the passages 5g and 5f of the right-hand branch duct 5R is supplied into the chambers 4a and 4b within the right-hand surge tank 4R.

Assuming that the choke valve 13 in each of the surge tanks 4L and 4R is in the closed position, the chambers 4a and 4b in the respective surge tank 4L and 4R communicate with each other through an associated connecting passageway 14L and 14R, respectively, having disposed therein at a location substantially intermediate of its length a choke valve 15 for the adjustment of the resonant supercharging characteristics so as to be in synchronization with the number of engine revolutions. Each connecting passageways 14 has a shorter length than the partition wall 5e formed within the associated branch duct 5L or 5R.

It is to be noted that the throttle casing 3 is rigidly mounted on stays 16 which are integrally formed with respective walls of the intake passages 6a, 6b, 6g and 6h. It is also to be noted that reference numeral 17 employed in Fig. 2 represent fuel injection nozzles through which fuel is injected into the associated combustion chambers.

The left-hand connecting tank 9L communicates with the inside of the associated left-hand branch duct 5L through a short connecting passage 31L, which in turn has an opening at a location immediately on the upstream side of the passages 5f and 5g of the left-hand branch duct 5L. The connecting passage 31L is arranged so as to be as short as possible and disposed in the vicinity of a location at which the left-hand branch duct 5L approches the connecting tank 9L to the closest extent. Likewise, the right-hand connecting tank 9R communicates with the associated right-hand branch duct 5R through a short connecting passage 31R.

Dynamic effects of intake air brought about by the operation of the valves 11, 13 and 15 will now be discussed. However, for the purpose of a better understanding, the firing sequence of the combustion chambers is assumed to be such that the combustion chambers communicating with the intake passages 6a to 6c will not be fired immediately one after another, the combustion chambers communicating with the intake passages 6d to 6f will not be fired immediately one after another, the combustion chambers communicating with the intake passages 6g to 6i will not be fired immediately one after another, and the combustion chambers communicating with the intake passages 6j to 6l will not be fired immediately one after another.

Thus, the chamber 4a of the left-hand surge tank 4L represents a first merging section for the three individual (independent) intake passages 6a, 6b and 6c connected to the respective intake ports 2a, 2b and 2c of the three associated cylinders. The same is true for the chamber 4b of the left-hand surge tank 4L, which chamber represents a second merging section for the three individual (independent) intake passages 6d, 6e and 6f connected to the respective intake ports 2d, 2e and 2f. Further, the chamber 4a of the right-hand surge tank 4R represents a merging section for the three individual (independent) intake passages 6g, 6h and 6i connected to the respective intake ports 2g, 2h and 2i, while the chamber 4b of the right-hand surge tank 4R represents a merging section for the individual (independent) intake passages 6j, 6k and 6l connected to the respective intake ports 2j, 2k and 2l.
(1) When the number of revolutions of the combustion engine is lower than 3,500 rpm, all of the valves 11, 13 and 15 are closed and, therefore, a resonant supercharging takes place in the portions of the branch ducts 5L and 5R located upstream of the respective partition walls 5e and being utilized as pressure reversing portions (i.e., a resonant supercharging takes place within the passages 5f and 5g utilized as resonant passages).
(2) When the number of revolutions of the combustion engine is within the range of 3,500 to 4,500 rpm, the valves 11 and 13 are closed and only the valves 15 are opened and, therefore, the resonant supercharging takes place within the connecting passageways 14L, 14R utilized as resonant passageways.
(3) When the number of revolutions of the combustion engine is within the range of 4,500 to 5,500 rpm, only the valves 11 are closed and the valves 13 and 15 are opened. In this condition, an inertia supercharging takes place within the surge tanks 4L and 4R used as pressure reversing portions.
(4) When the number of revolutions of the combustion engine is higher than 5,500 rpm, all of the valves 11, 13 and 15 are opened. In this condition, the inertia supercharging takes place within the connecting tanks 9L and 9R being utilized as pressure reversing portions.

In the modes as described by items (1) to (3), intake air is fed to the individual intake passages 6a to 6l, inclusive, through the surge tanks 4L or 4R, thereby lengthening the passage for supplying the intake air. In the mode as described by item (4) above, intake air is supplied to the individual intake passages 6a to 6l, inclusive, through the connecting tank 9L or 9R from the connecting passages 31L or 31R by bypassing the passages 5f or 5g or the surge tank 4L or 4R, thereby shortening the length of passage through which the intake air is fed.

## Claims

1. An intake system of a combustion engine, comprising,
a first merging section (4a) communicating through respective individual intake passages (6a-6c; 6g-6i) individually and separately with each of cylinders (2a-2c; 2g-2i) of one cylinder group, in which the cylinders are ignited in a sequence discontinuous with each other;
a second merging section (4b) communicating through respective individual intake passages (6d-6f; 6j-6l) individually and separately with each of cylinders (2d-2f; 2j-2l) of another cylinder group, in which the cylinders are ignited in a sequence discontinuous with each other;
a first upstream intake manifold passage (5f) for supplying intake air to the first merging section (4a);
a second upstream intake manifold passage (5g) for supplying intake air to the second merging section (4b);
**characterized by**
a connecting tank (9L, 9R) communicating an intermediate portion of each of the individual intake passages (6a-6f; 6g-6l) with each other; and
a short connecting passage (31) communicating each of an upstream portion of the first upstream intake manifold passage (5f) and the second upstream intake manifold passage (5g) with the connecting tank.

2. An intake system as claimed in claim 1, wherein shutter valves (11) are provided for opening and closing respective connections (10) between the connecting tank (9L, 9R) and each of the individual intake passages communicating with same.

3. An intake system as claimed in claims 1 or 2, wherein the connecting tank (9L,9R) is interposed between the associated individual intake passages and the associated upstream intake manifold passage.

4. An intake system as claimed in any of the previous claims, wherein the connecting tank (9L,9R) has a wall thickness thicker at a portion immediately below the associated upstream intake manifold passage (5f,5g) than at the other portion.

5. An intake system as claimed in any of the previous claims, wherein the combustion engine is a V-type combustion engine having a first cylinder bank (1L) and a second cylinder bank (1R) arranged in a V-shaped form and having the cylinders (2a-2c; 2g-2i) that communicate with the first merging section (4a) disposed in one cylinder bank (1L;1R) and the cylinders (2j-2l; 2d-2f) that communicate with the second merging section (4b) disposed in the other cylinder bank (1R;1L).

6. An intake system as claimed in any of claims 1 to 4, wherein the combustion engine is a V-type combustion engine having a first cylinder bank (1L) and a second cylinder bank (1R) arranged in a V-shaped manner, each cylinder bank (1L;1R) having disposed therein the cylinders (2a-2c; 2g-2i) communicating with the first merging section (4a) and the cylinders (2d-2f; 2j-2l) communicating with the second merging section (4b).

7. An intake system as claimed in claims 5 or 6, wherein:
a throttle casing (3) is disposed in the V-shaped central space (V) defined by the cylinder banks (1L,1R); and
the upstream intake manifold passages (5f,5g) are connected to the throttle casing (3).

8. An intake system as claimed in any of the previous claims, wherein the first and the second merging sections (4a,4b) are each composed of a surge tank.

9. An intake system as claimed in any of claims 1 to 7, wherein both, the first and the second merging sections (4a,4b) associated with each of the cylinder banks (1L;1R) are enclosed in a surge tank (4L;4R) having disposed therein a choke valve (13), which in its closed position defines within the surge tank (4L,4R) two chambers (4a,4b) constituting the first merging section (4a) and the second merging section (4b).

10. An intake system as claimed in claim 9, wherein:
a connecting passageway (14L;14R) is arranged on each surge tank (4L;4R) for communicating the two chambers (4a and 4b) with each other, which connecting passageway (14L;14R) has disposed therein at an intermediate portion a choke valve (15) for opening and closing the connecting passageway (14L;14R).

11. An intake system as claimed in any of the claims 8 to 10, wherein each connecting tank (9L,9R) has the shutter valves (11) associated therewith pivotally supported by a common rotary shaft (12).

## Patentansprüche

1. Ansaugsystem für eine Brennkraftmaschine
mit einem ersten Mischabschnitt (4a), der über individuelle Ansaugdurchgänge (6a-6c; 6g-6i) individuell und getrennt mit jedem der Zylinder (2a-2c; 2g-2i) einer Zylindergruppe in Verbindung steht, in der die Zylinder in einer diskontinuierlichen Folge gezündet werden,
mit einem zweitem Mischabschnitt (4b), der über individuelle Ansaugdurchgänge (6d-6fc; 6j-6l) individuell und getrennt mit jedem der Zylinder (2d-2f; 2j-2l) einer anderen Zylindergruppe in Verbindung steht, in der die Zylinder in einer diskontinuierlichen Folge gezündet werden,
mit einem ersten stromaufwärtigen Ansaugkrümmerdurchgang (5f) zur Zuführung von Ansaugluft zu dem ersten Mischabschnitt (4a),
sowie mit einem zweiten stromaufwärtigen Ansaugkrümmerdurchgang (5g) zur Zuführung von Ansaugluft zu dem zweiten Mischabschnitt (4b),
**gekennzeichnet durch**
einen Verbindungsbehälter (9L, 9R), der einen mittleren Teil jedes der individuellen Ansaugdurchgänge (6a-6f; 6g-6l) miteinander verbindet,
und einen kurzen Verbindungsdurchgang (31), der jeweils einen stromaufwärtigen Teil des ersten stromaufwärtigen Ansaugkrümmerdurchgangs (5f) und des zweiten stromaufwärtigen Ansaugkrümmerdurchgangs (5g) mit dem Verbindungsbehälter verbindet.

2. Ansaugsystem nach Anspruch 1, bei dem Verschlußklappen (11) zum Öffnen und Schließen entsprechender Verbindungen (10) zwischen dem Verbindungsbehälter (9L, 9R) und jedem der mit diesem kommunizierenden individuellen Ansaugdurchgänge vorgesehen sind.

3. Ansaugsystem nach Anspruch 1 oder 2, bei dem der Verbindungsbehälter (9L, 9R) zwischen den jeweiligen individuellen Ansaugdurchgängen und dem zugehörigen stromaufwärtigen Ansaugkrümmerdurchgang angeordnet ist

4. Ansaugsystem nach einem der vorhergehenden Ansprüche, bei dem die Wandstärke des Verbindungsbehälters (9L, 9R) in einem Bereich unmittelbar unter dem zugehörigen stromaufwärtigen Ansaugkrümmerdurchgang (5f, 5g) größer ist als in dem anderen Bereich.

5. Ansaugsystem nach einem der vorhergehenden Ansprüche, bei dem die Brennkraftmaschine eine Brennkraftmaschine vom V-Typ ist mit einer ersten Zylinderreihe (1L) und einer zweiten Zylinderreihe (1R), die in V-Form angeordnet sind und deren mit dem ersten Mischabschnitt (4a) kommunizierende Zylinder (2a-2c; 2g-2i) in der einen Zylinderreihe (1L; 1R) und deren mit dem zweiten Mischabschnitt (4b) kommunizierende Zylinder (2j-2l; 2d-2f) in der anderen Zylinderreihe (1R; 1L) angeordnet sind.

6. Ansaugsystem nach Anspruch 1 bis 4, bei dem die Brennkraftmaschine eine Brennkraftmaschine vom V-Typ ist mit einer ersten Zylinderreihe (1L) und einer zweiten Zylinderreihe (1R), die V-förmig angeordnet sind, wobei in den einzelnen Zylinderreihen (1L; 1R) die mit dem ersten Mischabschnitt (4a) kommunizierenden Zylinder (2a-2c; 2g-2i) bzw. die dem zweiten Mischabschnitt (4b) kommunizierenden Zylinder (2d-2f; 2j-2l) angeordnet sind.

7. Ansaugsystem nach Anspruch 5 oder 6, bei dem
in dem von dem Zylinderreihen (1L; 1R) begrenzten V-förmigen Zwischenraum (V) ein Drosselklappengehäuse (3) angeordnet ist, und
die stromaufwärtigen Ansaugkrümmerdurchgänge (5f, 5g) mit dem Drosselklappengehäuse (3) verbunden sind.

8. Ansaugsystem nach einem der vorhergehenden Ansprüche, bei dem der erste und der zweite Mischabschnitt (4a, 4b) jeweils aus einem Ausgleichsbehälter bestehen.

9. Ansaugsystem nach einem der Ansprüche 1 bis 7, bei dem sowohl der erste als auch der zweite der den einzelnen Zylinderreihen (1L; 1R) zugeordneten Mischabschnitte (4a, 4b) jeweils in einem Ausgleichsbehälter (4L, 4R) angeordnet sind, in dem sich ein Drosselventil (13) befindet, das in seiner Schließstellung innerhalb des Ausgleichsbehälters (4L, 4R) zwei Kammern (4a, 4b) begrenzt, die den ersten Mischabschnitt (4a) bzw. den zweiten Mischabschnitt (4b) bilden.

10. Ansaugsystem nach Anspruch 9, bei dem an jedem Ausgleichsbehälter (4L; 4R) ein Verbindungsdurchgang (14L; 14R) angeordnet ist, der die beiden Kammern (4a, 4b) miteinander verbindet, wobei der Verbindungsdurchgang (14L; 14R) in seinem mittleren Teil ein Drosselventil (15) zum Öffnen und Schließen des Verbindungsdurchgangs (14L; 14R) aufweist.

11. Ansaugsystem nach einem der Ansprüche 8 bis 10, bei dem die den einzelnen Verbindungsbehältern (9L, 9R) zugeordneten Verschlußklappen (11) mit Hilfe einer gemeinsamen drehbaren Welle (12) verschwenkbar sind.

## Revendications

1. Système d'admission de moteur à combustion, comportant
un premier tronçon de répartition (4a) communiquant par l'intermédiaire de passages d'admission individuels respectifs (6a à 6c; 6g à 6i), de manière individuelle et séparée, avec chacun des cylindres (2a à 2c; 2g à 2i) d'un premier groupe de cylindres dans lequel les cylindres sont allumés selon une séquence discontinue l'un par rapport à l'autre,
un second tronçon de répartition (4b) communiquant à travers des passages d'admission individuels respectifs (6d à 6f; 6j à 6l), de manière individuelle et séparée, avec chacun des cylindres (2d à 2f; 2j à 2l) d'un autre groupe de cylindres dans lequel les cylindres sont allumés selon une séquence discontinue l'un par rapport à l'autre,
un premier passage (5f) formant collecteur d'admission amont destiné à envoyer l'air d'admission vers le premier tronçon de répartition (4a),
un second passage (5g) formant collecteur d'admission amont destiné à envoyer l'air d'admission vers le second tronçon de répartition (4b),
caractérisé en ce qu'il comporte
un réservoir de liaison (9L; 9R) mettant en communication l'une avec l'autre une partie intermédiaire de chacun des passages d'admission individuels (6a à 6f; 6j à 6l), et
un passage de liaison court (31) mettant en communication chacune des parties amont du premier passage (5f) formant collecteur d'admission amont et du second passage (5g) formant collecteur d'admission amont avec le réservoir de liaison.

2. Système d'admission selon la revendication 1, dans lequel des vannes obturatrices (11) sont agencées pour ouvrir et fermer les liaisons respectives (10) existant entre le réservoir de liaison (9L; 9R) et chacun des passages d'admission individuels communiquant avec ce dernier.

3. Système d'admission selon la revendication 1 ou 2, dans lequel le réservoir de liaison (9L; 9R) est interposé entre les passages individuels d'admission associés et le passage formant collecteur d'admission amont associé.

4. Système d'admission selon l'une quelconque des revendications précédentes, dans lequel le réservoir de liaison (9L; 9R) a une épaisseur de paroi plus épaisse au niveau d'une partie située immédiatement en dessous du passage (5f, 5g) formant collecteur d'admission amont associé qu'au niveau de l'autre partie.

5. Système d'admission selon l'une quelconque des revendications précédentes, dans lequel le moteur à combustion est un moteur à combustion du type en V ayant une première rangée de cylindres (1L) et une seconde rangée de cylindres (1R) agencées en forme de V, les cylindres (2a à 2c; 2g à 2i) qui communiquent avec le premier tronçon de répartition (4a) étant agencés dans une première rangée de cylindres (1L; 1R) et les cylindres (2j à 2l; 2d à 2f) qui communiquent avec le second tronçon de répartition (4b) étant agencés dans l'autre rangée de cylindres (1R; 1L).

6. Système d'admission selon l'une quelconque des revendications 1 à 4, dans lequel le moteur à combustion est un moteur à combustion du type en V ayant une première rangée de cylindres (1L) et une seconde rangée de cylindres (1R) agencées en forme de V, chaque rangée de cylindres (1L; 1R) comportant les cylindres (2a à 2c; 2g à 2i) communiquant avec le premier tronçon de répartition (4a) et les cylindres (2d à 2f; 2j à 2l) communiquant avec le second tronçon de répartition (4b).

7. Système d'admission selon la revendication 5 ou 6, dans lequel :
un boîtier à papillons (3) est agencé dans l'espace (V) central en forme de V défini par les rangées de cylindres (1L; 1R), et
les passages (5f, 5g) formant collecteur d'admission amont sont reliés au boîtier à papillons (3).

8. Système d'admission selon l'une quelconque des revendications précédentes, dans lequel le premier et le second tronçons de répartition (4a, 4b) sont chacun constitués d'un réservoir d'égalisation de pression.

9. Système d'admission selon l'une quelconque des revendications 1 à 7, dans lequel à la fois le premier et le second tronçons de répartition (4a, 4b) associés à chacune des rangées de cylindres (1L; 1R) sont enfermés dans un réservoir d'égal isation de pression (4L; 4R) dans lequel est agencée une vanne papillon (13) qui dans sa position fermée définit à l'intérieur du réservoir d'égalisation de pression (4L; 4R) deux chambres (4a, 4b) constituant le premier tronçon de répartition (4a) et le second tronçon de répartition (4b).

10. Système d'admission selon la revendication 9, dans lequel :
un passage de liaison (14L, 14R) est agencé sur chaque réservoir d'égalisation de pression (4L; 4R) pour mettre en communication les deux chambres (4a et 4b) l'une avec l'autre, lequel passage de liaison (14L; 14R) comporte une vanne papillon (15) agencée dans celui-ci au niveau d'une partie intermédiaire pour ouvrir et fermer le passage de liaison (14L; 14R).

11. Système d'admission selon l'une quelconque des revendications 8 à 10, dans lequel chaque réservoir d'égalisation de pression (9L; 9R) comporte des vannes obturatrices (11) associées à celui-ci, supportées de manière pivotante par un arbre rotatif commun (12).
